# EUROPÄISCHE PATENTSCHRIFT

(11) **EP 1 888 475 B1**
(45) Veröffentlichungstag und Bekanntmachung des Hinweises auf die Patenterteilung: **10.03.2010**
(21) Anmeldenummer: 06776550.3
(22) Anmeldetag: 02.08.2006
(51) Int. Cl.: C03C 10/00, C03C 14/00

(54) **VERWENDUNG EINER GLASKERAMIK ALS PANZERMATERIAL**
USE OF A GLASS CERAMIC AS ARMOUR MATERIAL
UTILISATION D'UNE VITROCERAMIQUE COMME MATERIAU DE BLINDAGE

(30) Priorität: 13.08.2005 DE 102005038457
(43) Veröffentlichungstag der Anmeldung: 20.02.2008
(73) Patentinhaber: Schott AG, 55122 Mainz (DE)
(72) Erfinder: LIEBALD, Rainer, 64569 Nauheim (DE); BEIER, Wolfram, 55270 Essenheim (DE); ALKEMPER, Jochen, 55270 Klein-Winternheim (DE); ZACHAU, Thilo, 68642 Bürstadt-Riedrode (DE); SPRINGER, Dirk, 55271 Stadecken-Elsheim (DE)
(74) Vertreter: Mehler, Klaus
(86) Internationale Anmeldenummer: PCT/EP2006/007635
(87) Internationale Veröffentlichungsnummer: WO 2007/019959

(56) Entgegenhaltungen:
- WO-A-2004/031089
- DE-A1- 2 805 764
- US-A- 5 284 806

## Beschreibung

Die Erfindung betrifft ein Panzermaterial für Panzerungen zum Schutz von Personen oder Einrichtungen gegen Hochgeschwindigkeitsgeschosse, Splitter oder dergleichen. Derartige Panzerungen finden Verwendung als kugelsichere Westen oder Fahrzeugpanzerungen für beschußsichere Automobile, Hubschrauber, Flugzeugkabinen usw.

Keramische Panzermaterialien sind seit vielen Jahren bekannt. Sie finden insbesondre bei Panzerungen Verwendung, bei denen es auf ein niedriges Gewicht ankommt, also z.B. in kugelsicheren Westen und in Panzerungen für Automobile, von Flugzeugen und Hubschraubern, hier insbesondere im Cockpit oder in den Sitzen und für funktionell wichtige Teile. Die ersten und auch bis heute noch verwendeten Panzermaterialien aus Keramik bestanden aus Al₂O₃, SiC, B₄C, TiB₂. Sie können nur nach sehr aufwendigen Produktionsverfahren hergestellt werden, z.B. gemäß US 2003/0110931 A1 durch reaktive Infiltration einer porösen, kohlenstoffhaltingen Borcarbid-Preform mit geschmolzenem Silizium, und sind entsprechend teuer.

Es ist daher ebenfalls seit längerem bekannt, Glaskeramik als Panzermaterial einzusetzen. Glaskeramik wird seit Jahrzehnten dadurch hergestellt, daß spezielle Gläser gezielt entglast werden. Bei der als Keramisierung bezeichneten Entglasung wird ein Teil des Glases durch eine Wärmebehandlung gezielt in Kristalle umgewandelt, die sich in einer Matrix aus der Restglasphase befinden. Die Wärmebehandlung läuft üblicherweise in zwei Stufen ab. In einer ersten Stufe wird das Glas bis zu 24 Stunden auf die Keimbildungstemperatur erhitzt, d.h. auf eine Temperatur, bei der sich im Glas besonders gut Kristallisationskeime bilden. Diese Keimbildungstemperatur liegt knapp oberhalb der Transformationstemperatur Tg des Glases. Haben sich genügend Kristallkeime gebildet, wird die Temperatur weiter erhöht, bis sie in dem Gebiet liegt, wo an den Kristallkeimen die Kristalle bzw. Kristallite (bis zu 10¹⁷/cm³) entstehen.

Ein Panzermaterial aus Glaskeramik der Zusammensetzung (in Gew.-%) von 78,5-84,5 SiO₂; 9,5-15 Li₂O; 1-6 Al₂O3; 1,5-4 K₂O mit TiO₂, ZrO₂ oder SnO₂ als Keimbildner ist in US 4 473 653 beschrieben.

EP 0 390 773 B1 und die äquivalente US 5,060,553 beschreiben ein Verbundpanzermaterial bestehend aus einer, in Aufprallrichtung eines Geschosses gesehen vorderen Platte aus Glaskeramik, an die eine hintere Schicht aus faserverstärktem Kunststoff geklebt ist. Das Verbundpanzermaterial dieser Schrift ist gemäß Patentanspruch 1 durch eine Wärmebehandlung gekennzeichnet, die der oben angegebenen allgemein üblichen Verfahrensweise zur Herstellung von Glaskeramik entspricht. Die in der Beschreibung aufgeführten Glaskeramiken enthalten hauptsächlich (in Gew.-%) 72 SiO₂, 10 Li₂O, 5 ZnO, 7 Al₂O₃, eine zweite Glaskeramik 71 SiO₂, 12 Li₂O, 13 Al₂O₃; eine dritte Glaskeramik 36,5 SiO₂, 33,2 Al₂O₃, 17 ZrO₂, 13,1 MgO und eine vierte Glaskeramik 48,8 SiO₂, 26,5 Al₂O₃, 11,0 TiO₂, 8,4 MgO, 5,0 CaO und 0,3 Cr₂O₃. Die bislang üblichen Glaskeramiken des SiO₂-Al₂O₃-MgO-Systems (MAS-System) enthalten als Hauptkristallphasen üblicherweise Enstatit, Forsterit und Cordierit. Als Nebenphasen werden auch Spinell und Sapphirin-Phasen beschrieben. Dabei liegt die Untergrenze des SiO₂-Gehaltes bei 35 Gew.-%, wobei SiO₂-Untergrenzen von 40 bzw.42-44 Gew.-% üblich sind.

Nachteilig an den bisher für Panzermaterialien für Panzerungen verwendeten Glaskeramik ist, daß sie durchschnittlich nur ein E-Modul von ca. 130 GPa bei geringerem spezifischen E-Modul (E-Modul / Dichte) besitzen.

Aus der WO 2004/031089 ist eine hoch steife, bruchfeste Glaskeramik und deren Verwendung in Magnetspeicherplatten beschrieben, die einen Gehalt von 17 - 33 Gew.-% SiO₂. 20 - 50 Gew.-% Al₂O₃, 8 - 40 Gew.-% MgO, 1 - 15 Gew.-% B₂O₃ und 0,1 - 30 Gew.-% Sc₂O₃, Y₂O₃ und/oder Nb₂O₅ besitzt. Nach Beschreibung und Verwendungszweck der beiden letztgenannten Schriften kann von einer Eignung des Materials als Panzermaterial nicht ausgegangen werden. DE 28 05 764 beschreibt ein Keramisierungsverfahren sowie eine spinellhaltige Glaskeramik. Bezüglich der Eignung für irgendwelche Verwendungszwecke wird keine Aussage gemacht. US 5,284,806 zeigt, dass eine faserverstärkte Glaskeramik an sich bekannt ist. Allerdings unterscheidet sich die Zusammensetzung deutlich von der vorliegenden Glaskeramik.

Die Aufgabe der vorliegenden Erfindung besteht daher darin, als Panzermaterial für Panzerungen geeignete Glaskeramiken zu finden die einen hohen E-Modul, eine hohe Rißzähigkeit und eine gute Bruchfestigkeit aufweisen und deren Ausgangsgläser während der Entspannungskühlung entglasungsstabil und kristallisationsstabil sind, d.h. sie sollen bis zur gezielten Keimbildung/Kristallisation in der Glasphase vorliegen.

Diese Aufgabe wird gelöst durch die Verwendung einer Glaskeramik als Panzermaterial, wobei die Glaskeramik (in Gew.-% auf Oxidbasis) enthält:

| | | | |
|---|---|---|---|
| 5 | - | 33 | SiO₂ |
| 20 | - | 50 | Al₂O₃ |
| 5 | - | 40 | MgO |
| 0 | - | 15 | B₂O₃ |
| 0,1 | - | 30 | Y₂O₃, Ln₂O₃, As₂O₃, Nb₂O₅ und/oder Sc₂O₃ |
| 0 | - | 10 | P₂O₅ |

Innerhalb dieses Zusammensetzungsbereichs sind zwei Zusammensetzungsbereiche besonders bevorzugt:
Zusammensetzungsbereich A:

| | | | |
|---|---|---|---|
| 5 | - | 33 | SiO₂ |
| 25 | - | 40 | Al₂O₃ |
| 5 | - | 25 | MgO |
| 0,1 | - | 30 | Y₂O₃, Ln₂O₃, As₂O₃ und/oder Nb₂O₅ |
| 0 | - | 15 | B₂O₃ |
| 0,1 | - | 10 | P₂O₅ |

und Zusammensetzungsbereich B:

| | | | |
|---|---|---|---|
| 17 | - | 33 | SiO₂ |
| 20 | - | 50 | Al₂O₃ |
| 8 | - | 40 | MgO |
| 0,1 | - | 30 | Y₂O₃, Sc₂O₃ und/oder Nb₂O₅ |
| 1 | - | 15 | B₂O₃ |

Die Mindestmenge an SiO₂ beträgt 5 Gew.-%, insbesondere 10 - Gew.-%, bevorzugt 15 Gew.-% für Zusammensetzung A, wobei für die Zusammensetzung B 18 Gew.-%, insbesondere 19 Gew.-% bevorzugt sind. Die Obergrenze beträgt üblicherweise 33 Gew.-%, wobei 28 Gew.-% und insbesondere 25 Gew.-% bevorzugt sind.

Die Mindestmenge an MgO beträgt 5 Gew.-%, und für Zusammensetzung A vorzugsweise 8 Gew.-% und besonders bevorzugt 10 Gew.-%, während für Zusammensetzung B vorzugsweise mindestens 10 Gew.-% und insbesondere 15 Gew.-% eingesetzt werden. Die Obergrenze für den MgO-Gehalt liegt für Zusammensetzung A bei 25 Gew.-%, während 20 Gew.-% bevorzugt werden, während ansonsten die Obergrenze bei 40 Gew.-% liegt, wobei 30 bzw. 25 Gew.-% und insbesondere 20 Gew.-% bevorzugt werden.

Der maximale Gehalt an Al₂O₃ beträgt 50 Gew.%, insbesondere 40 Gew.-%, vorzugsweise 38 Gew.-% und für Zusammensetzung B besonders bevorzugt mindestens 30 Gew.-%. Die Mindestmenge an Al₂O₃ beträgt 25 Gew.-%.

Boroxid muß nicht unbedingt vorhanden sein, jedoch beträgt der Gehalt an B₂O₃ insbesondere 1 Gew.-%, bevorzugt 2 Gew.-% und besonders bevorzugt 3 Gew.-%, während die Obergrenze in der erfindungsgemäßen Zusammensetzung bei maximal 15 Gew.-%, üblicherweise bei maximal 12 Gew.-% und vorzugsweise bei maximal 10 bzw. maximal 9 Gew.-% liegt.

Der Zusatz von einem oder mehreren der Oxide Y₂O₃, Ln₂O₃, As₂O₃, Sc₂O₃ und Nb₂O₅ verbessert die technische Verarbeitbarkeit der Gläser vor der Keramisierung und macht die aus ihnen hergestellt Glaskeramik besonders steif und bruchfest. Weiterhin sorgt er dafür, dass die Gläser während der Entspannungskühlung, d.h. vor der gezielten Keimbildung, gegenüber der Ausbildung kristalliner Phasen stabil sind und somit bis zur Entspannung kühlbar sind. Dadurch liegen vor der Keimbildungsphase stets konstante Verhältnisse vor, so dass die Erzeugung eines Produkts mit konstanten, reproduzierbaren Eigenschaften deutlich vereinfacht wird. Die Oxide dieser Gruppe sind mit mindestens 0,1 Gew.-%, üblicherweise mindestens 3 Gew.%, vorzugsweise mindestens 10 Gew.-%, besonders bevorzugt 12 Gew.-% in der Glaskeramik vertreten. Die Obergrenze dieser Oxide beträgt 30 Gew.-%, vorzugsweise 28 Gew.-%, wobei eine Obergrenze von 25 Gew.-% besonders bevorzugt ist. Dabei betragen die Mengen der einzelnen Oxide üblicherweise 1 bis 30 Gew.-%, vorzugsweise 10-30 für Y₂O₃, und vorzugsweise jeweils 0-20 Gew.-% für Ln₂O₃, Nb₂O₅ und Sc₂O₃. Dabei ist in Zusammensetzung A vorzugsweise kein Sc₂O₃ und in der Zusammensetzung B vorzugsweise kein Ln₂O₃ enthalten.

Ln umfasst dabei die Gruppe der Lanthanoiden, insbesondere La, Ce, Pr, Nd, Eu, Yb, Ho und Er.

Die erfindungsgemäß verwendete Zusammensetzung kann als weitere Komponenten übliche Läuterungs- und Flußmittel, wie Sb₂O₃, As₂O₃, SnO₂, in den für diese Zwecke üblichen Anteilen enthalten. Dabei beträgt die Obergrenze vorzugsweise jeweils für Sb₂O₃ bzw. As₂O₃ max. 5% und vorzugsweise max. 2%.

In einer bevorzugten Ausführungsform enthält die Glaskeramik 0-12 Gew.-%, insbesondere 0-10 Gew.-%, TiO₂, 0-10 Gew.-% ZrO₂, 0-10 Gew.-%, insbesondere 0-5 Gew.-% CaO, 0-10 Gew.-%, insbesondere 0-5 Gew.-% SrO, 0-10 Gew.-%, insbesondere 0-5 Gew.-% BaO, 0-20 Gew.-%, insbesondere 0-10 Gew.-% ZnO. In einer weiteren erfindungsgemäß bevorzugten Ausführungsform enthält die Zusammensetzung mindestens 2 Gew.-%, vorzugsweise mindestens 4 Gew.-% TiO₂ und eine maximale Menge von vorzugsweise höchstens 12 Gew.-% und insbesondere höchstens 10 Gew.-%. Sofern diese überhaupt enthalten sind, beträgt die Mindestmenge für die übrigen genannten Oxide ZrO₂ und ZnO üblicherweise jeweils 1 oder 2 Gew.-% und die Höchstmenge jeweils 5 oder 8 Gew.-%.

Die Glaskeramik ist vorzugsweise im wesentlichen frei von Alkalioxiden wie Li₂O, Na₂O und K₂O und enthält diese nur als mit den restlichen Gemengekomponenten eingeschleppte Verunreinigungen. Dabei bedeutet "im wesentlichen alkalifrei" eine Menge von höchstens 2 Gew.-%, wobei höchstens 0,5 Gew.-% üblich sind. Bevorzugte Glaskeramiken weisen einen Alkaligehalt von unter 0,5 Gew.-% auf.

Es hat sich gezeigt, dass die Glaskeramik bis zu 10 Gew.-%, üblicherweise weniger als 5 Gew.-% an Übergangsmetalloxiden aufweisen kann, ohne dass sich dabei resultierende Eigenschaften, wie Steifigkeit, Bruchfestigkeit und Kristallisationsverhalten signifikant ändern. Übliche, im erfindungsgemäßen Glas bzw. in der Glaskeramik enthalten sein könnende Übergangsmetalloxide umfassen die Oxide der Elemente Fe, Co, Ni, Cr, Mn, Mo, V, Pt, Pd, Rh, Ru und W und sind insbesondere MnO₂, Fe₂O₃, NiO, CoO, Cr₂O₃, V₂O₅, MoO₃ und /oder WO₃.

Weiterhin kann die Glaskeramik (neben MgO) noch zusätzlich als stabilisierende Komponenten die Erdalkalioxide CaO, SrO und BaO enthalten. Die Summe dieser drei Komponenten kann bis zu 20 Gew.-% betragen, insbesondere bis zu 15 Gew.-%. In einer bevorzugten Ausführungsform beträgt die Summe dieser drei Erdalkalioxide mindestens 1 Gew.-%, vorzugsweise mindestens 2 Gew.-.%, besonders bevorzugt bis zu 4 Gew.-% und insbesondere bis zu 5 Gew.-%.

Sofern vorhanden, beträgt der Anteil der Oxide TiO₂ und ZrO₂ in einer erfindungsgemäß bevorzugten Ausführungsform mindestens 1 Gew.-%, vorzugsweise mindestens 2 Gew.-% und vorzugsweise höchstens 13 Gew.-%, insbesondere höchstens. 10 Gew.-%. Die Glaskeramik kann ferner neben TiO₂ und ZrO₂ als Kristallbildner auch P₂O₅ in Mengen von bis zu 10 Gew.-% enthalten. Bei Zugaben an P₂O₅ im oberen Teil dieses Bereichs wird P₂O₅ auch in die entstehenden Kristalle eingebaut. Bevorzugt wird ein Gehalt von P₂O₅ von weniger als 10 Gew.-%, insbesondere weniger als 5 Gew.-%. Ein Mindestgehalt an P₂O₅ von 2 Gew.-% ist günstig, falls P₂O₅ überhaupt zugesetzt wird.

Bei dem erfindungsgemäßen Panzermaterial sind die Kristallite in einer glasigen Matrix eingelagert und weisen eine Größe von ca. 20 nm bis 3 µm auf. Bevorzugt sind Kristallitgrößen von 50 bis 500 nm. Der Kristallphasengehalt in dem Panzermaterial beträgt 30 bis 80 Vol.-%, mit den Hauptkristallphasen Spinell (MgO Al₂O₃), Sapphirin ( 5 MgO · 7 Al₂0₃ · 9 SiO₂) und ggfls. Y-Silikate (z.B. Y₂Si₂O₇, Y₂SiO₅), wobei unter Hauptphasen verstanden werden soll, daß die Hauptphasen wenigstens etwa 50% der Kristallphasen überhaupt ausmachen.

Die an sich bereits guten schußhemmenden Eigenschaften dieser Glaskeramik werden durch eine Faserverstärkung noch einmal aufgewertet, wobei durch die verhältnismäßig einfache Herstellbarkeit der neuen Armierung weitere Kostenvorteile erreichbar sind.

Die Verstärkungsfasem sollen in dem Panzermaterial in einer Menge von 5 bis 65 Vol.-% vorliegen. Eine Verstärkung der Glaskeramik findet zwar auch bei Zugabe von Fasern unterhalb dieser Untergrenze statt, ihre Wirkung ist dann aber für eine deutliche Verbesserung der Gebrauchseigenschaften der Panzerung im allgemeinen zu gering. Bevorzugt werden Gehalte an Verstärkungsfasem von 15 bis 45 Vol.-%. Ein Gehalt von mehr als 65 Vol.-% sollte nicht überschritten werden, da dann eine homogene Vermischung der Fasern mit der Glas(keramik)-Matrix nicht mehr sichergestellt ist. Außerdem ist die dann nur noch geringe Restglas(keramik)-Matrixphase nicht mehr in der Lage, ihre Bindungsfunktion, d.h. den Zusammenhalt des Komposits, sicher zu erfüllen.

Als Verstärkungsfasern kommen alle anorganischen Fasern in Frage, die über eine hohe Zugfestigkeit verfügen und gut in der Matrix aus Glaskeramik verankerbar sind. Die Fasern müssen für den Sintervorgang mindestens bis ca. 1000°C hitzebeständig sein und dürfen nicht mit dem Grundglas und der Glaskeramik unter Schwächung ihrer Festigkeitseigenschaften reagieren.

Als Verstärkungsfasern geeignet sind Fasern aus Kohlenstoff, SiC, Si₃N₄, Al₂O₃, ZrO₂ und/oder Fasern des Typs SiAlON (Si, Al, O, N), ferner Fasern aus BN, TiC, weiteren Nichtoxid-Keramiken, sowie beschichtete Fasern aus Oxidkeramiken oder auch Metallen. Besonders bevorzugt werden Fasern aus Kohlenstoff und Siliciumcarbid.

Bei den verwendeten Fasern handelt es sich um Kurz-, Lang- und/oder Endlosfasern. Kurzfasern haben Längen von ca. 50µm bis 5 cm, bevorzugt von ca. 10 bis 30 mm, unter Langfasem sollen Fasern bis etwa 20 cm Länge verstanden werden, wohingegen Endlosfasern eine Lange > 20 cm haben. Geeignet sind beispielsweise Kohlenstoffasern oder keramische Fasern, wie beispielsweise SiC-Fasem. Der Durchmesser der Faser beträgt hier bei Kohlenstoffasern 4 - 10 µm, bei SiC-Fasem 8 - 15 µm.

Lang- und/oder Endlosfasern bewirken eine besonders deutliche Erhöhung der Bruchzähigkeit und der Festigkeit. Kurzfasern sind prozeßtechnisch einfacher handhabbar, erhöhen die Wirtschaftlichkeit des Herstellungsverfahrens und reichen aus, wenn eine maximale Erhöhung der Bruchzähigkeit und der Festigkeit nicht erforderlich sind.

Es können auch Whisker, z.B. aus allen oben unter Fasern aufgezählten Werkstoffen, aus WC sowie aus Metallen als Verstärkungsfasern verwendet werden. Whisker haben im allgemeinen Längen von 5 µm bis 500 µm und Durchmesser von 1µm bis 10 µm. Sie lassen sich bei der Herstellung der Panzermaterialien besonders einfach und in besonders hohen Volumenanteilen in der GlaskeramikMatrix verteilen, allerdings ist die mit ihnen erreichbare Festigkeit nicht so hoch wie bei den mit Kurz-, Lang- und Endlosfasern verstärkten Panzermaterialien.

Es kann von Vorteil sein, wenn die Fasern mit einem anorganischen Gleitmittel versehen sind. Die Verwendung solcher beschichteter Fasern führt zu einem besonders bruchzähen Werkstoff. Bei kohlenstoffhaltigen nichtoxidischen Fasern liegt dies daran, daß sich auf der Oberfläche der Fasern eine extrem dünne Gleitschicht mit Graphitstruktur ausbildet, welche bei starker mechanischer Belastung dazu führt, daß ein Teil der Energie für das Herausziehen, Dehnen und Zerreißen der Faser umgesetzt wird (so genannter pull-out-Effekt). Dies führt zu einer deutlich erhöhten Brucharbeit bzw. Bruchzähigkeit und Festigkeit. Gleiches gilt sinngemäß auch dann, wenn oxidische Fasern verwendet werden, deren Oberfläche zuvor mit einem entsprechenden Hochtemperatur-Gleitmittel wie z.B. Glimmer oder anderen Schichtsilicaten konditioniert wurde.

Die Fasern können im Panzermaterial beliebig angeordnet sein. Im Falle von Whiskem und Kurzfasern bis ca. 30 mm sind diese im allgemeinen wirr verteilt, d.h. die Fasern sind in dem Material nicht ausgerichtet.

Das Komposit aus Glaskeramik und Fasern wird jedoch fester, wenn die Fasern in dem Komposit gerichtet vorliegen. So können die Fasern Schichtenstruktur aufweisen, bei der die Fasern in jeder Schicht, "tape" genannt, zueinander parallel verlaufen, benachbarte Schichten jedoch um 90° oder 45° versetzte Faserachsen aufweisen. Derartige Schichtenaufbauten sind an sich aus der Herstellung von faserverstärkten Kunststoffbauteilen bekannt.

Die Verstärkungsfasem können aber auch in dem Panzermaterial, beispielsweise in Form eines Gewebes, vorliegen. Bevorzugt wird ein textiles Flächegebilde in Form eines Geleges, Gestrickes oder Filzes. Besonders bevorzugt wird die Form eines Gestrickes. Insbesondere Gestricke ermöglichen es infolge ihres Maschengefüges, auch komplex geformte Geometrien zu erzeugen, was z.B. bei der Fahrzeugpanzerung von Vorteil sein kann.

Es kann ferner von Vorteil sein, wenn sich die Verstärkung in Form eines textilen Flächengebildes nicht gleichmäßig in dem Panzermaterial verteilt, sondern nur in der Vorder- und/oder Rückseite des Panzermaterials befindet, d.h. quasi asymmetrisch in dem Panzermaterial. Bei beidseitiger Verstärkung der Glaskeramik mit dem textilen Flächengebilde oder mit "tapes" wird die sandwichartig zwischen den Schichten aus Verstärkungsfasern liegende, unverstärkte Glaskeramikschicht dann sozusagen kaschiert. Bei einseitiger Verstärkung ähnelt das Panzermaterial den bisher verwendeten Kompositen aus einer Keramikplatte mit rückseitig aufgebrachter Versteifung aus aufgeklebten Metallplatten. Für den Fall, daß die Faserverstärkung nur als Schicht in dem ansonsten nicht verstärkten Glaskeramikmaterial vorliegt, sollte die Schicht vorzugsweise eine Stärke von wenigstens 10% der Schichtdicke des Panzermaterials besitzen, in jedem Fall aber mindestens 1 mm, vorzugsweise größer als 2 mm sein. Vorzugsweise sollte die Schichtdicke nicht größer als 5 mm betragen, da darüber hinaus das Komposit insgesamt für leichte Panzerungen zu schwer wird.

Die Herstellung eines faserverstärkten keramischen Panzermaterials erfolgt in der Regel mit Hilfe der Sintertechnologie, bei der ein Gemenge aus Verstärkungsfasern und Pulver aus dem Matrixmaterial unter Wärmeeinwirkung und ggf. Druck zusammengesintert wird. Da gemahlene, pulverisierte Glaskeramik nur schwer oder mitunter nur mit unbefriedigenden Ergebnissen gesintert werden kann, benutzt man als Ausgangsmaterial bevorzugt das gut sinterbare nicht keramisierte Glaspulver und keramisiert den entstandenen Sinterkörper während oder nach dem Sintern.

Man stellt somit zunächst aus dem Glas, das dieselbe Zusammensetzung hat wie die später daraus entstehende Glaskeramik, ein Pulver her. Das hat neben den schon erwähnten Vorteilen der besseren Sintereigenschaften bei niedrigen Temperaturen auch den Vorteil, daß sich das Glas leichter zu einem Pulver vermahlen läßt als Glaskeramik.

Dieses Glaspulver wird dann entweder mit den Verstärkungsfasem gemischt, was hauptsächlich bei der Verwendung von Whiskem und Kurzfasern in Frage kommt oder es werden die Poren eines textilen Flächengebildes aus Verstärkungsfasem mit dem Glaspulver gefüllt.

Die Mischung von Glaspulver und Verstärkungsfasem kann trocken erfolgen, jedoch kommt bevorzugt das Glaspulver als Suspension in Wasser, vorzugsweise mit einem Anteil eines Binders, zur Anwendung. Das Glaspulver hat dabei eine durchschnittliche Teilchendichte d₅₀ von 5 µm bis 60 µm, bevorzugt von 8 µm bis 35 µm. Bei Teilchengrößen unterhalb 5 µm steigen die Kosten für die Herstellung des Glaspulvers stark an und seine Handhabung wird erschwert, ohne daß sich bei der Verwendung des Pulvers noch zusätzliche Vorteile ergeben würden, bei Teilchengrößen oberhalb 60 µm ist es schwierig, homogene Mischungen und in den nachfolgenden Prozeßschritten porenfreie Komposite zu erzielen.

Zur Herstellung der Suspension können noch Suspensionshilfsmittel (deflocculants) verwendet werden, wie sie an sich aus der keramischen Industrie zur Stabilisierung der Schlicker bekannt sind, z.B. niedrigmolekulare anionische Polymere, insbesondere Natriumpolyacrylate.

Die Suspensionen können ferner noch Bindemittel enthalten, um dem erzeugten Rohgebilde nach dem Trocknen (dem Prepreg) noch soweit Festigkeit zu verleihen, daß es gehandhabt werden kann. Solche Bindemittel sind ebenfalls an sich bekannt. Falls das Suspensionshilfsmittel nicht schon von sich aus die Bindemittelfunktion mit übernimmt, kann z.B. der Zusatz eines Latexbinders, von Dextrin oder dergl. erfolgen.

Die Suspension soll einen möglichst hohen Gehalt an Feststoff(Glaspulver) besitzen und gleichzeitig eine möglichst geringe Viskosität besitzen, um die Poren des textilen Gebildes aus Verstärkungsfasern möglichst vollständig zu füllen bzw. um bei Mischung mit Kurzfasern und/oder Whiskern einen hohen Faseranteil (Whiskeranteil) ohne zu große mechanische Beanspruchung der Fasern zu ermöglichen.

Das Panzermaterial dient der Herstellung von Panzerungen. Zu diesem Zweck wird es üblicherweise mit anderen Stoffen zusammen zu einer Panzerung verarbeitet. So wird z.B. das Panzermaterial in Form von Kacheln, Plättchen oder Kugeln auf oder in einem Gewebe aus hochfesten Fasern wie Aramidfasern u. dergleichen befestigt. Das Panzermaterial kann auch rückseitig mit Metallplatten wie Aluminium, Stahl oder Titan verbunden sein oder mit zusammengesetzten Materialien wie faserverstärkten Kunststoffen verklebt sein. Die Kombinationsmöglichkeiten mit anderen Materialien sind an sich bereits aus der Verwendung der bekannten Keramikmaterialien bekannt und gehören zum Erfahrungs- und Wissensumfang eines Durchschnittsfachmanns.

Die Herstellung der oben genannten textilen Flächengebilde wird mit konventionellen Verfahren der Textilindustrie oder der Papierindustrie vorgenommen. Sie sind als solche bekannt und bilden nicht den Gegenstand dieser Erfindung. Insofern wird von deren näheren Beschreibung abgesehen.

Mit der genannten Faserarchitektur wird nach entsprechender Dimensionierung ein Prepreg hergestellt. Unter einem Prepreg wird eine unverdichtete Anordnung aus einer Vielzahl mit Matrixmaterial versehenen, teilweise im gegenseitigen Kontakt befindlichen, abgelagerten Fasern verstanden; dabei können auch noch mehrere textile Flächengebilde übereinander abgelagert sein. Das Prepreg weist noch einen hohen Porengehalt auf und besitzt 10 bis 80% der Dichte des Endproduktes.

Bei der Herstellung von Prepregs mittels einer Glaspulversuspension wird bevorzugt das textile Flächengebilde in einer porösen Form mit der Suspension getränkt. Das Wasser aus der Suspension wird durch die Wandung der porösen Form entfernt, das feuchte Prepreg wird der Form entnommen und getrocknet.

Nach der Trocknung wird das Prepreg anschließend durch Druck- und Wärmeeinwirkung verdichtet. Dies kann durch Heißpressen erfolgen, wobei Druck und Temperatur an die Schmelztemperatur der jeweiligen Matrix angepaßt wird. Typischerweise ist die gewählte Temperatur > 1000°C und der Druck > 5 MPa. Bei diesen Prozeßbedingungen wird das gesamte Glas entweder aufgeschmolzen oder aber es wird ein Sinterprozeß durchgeführt, so daß im letzten Fall von einem Drucksinterprozeß gesprochen werden kann.

Der so erzeugte, weitgehend porenfreie, aus Verstärkungsfasern und Glasmatrix bestehende Rohkörper wird dann noch keramisiert, d.h. die Glasmatrix wird in eine Glaskeramikmatrix umgewandelt.

Die Umwandlung der Glasphase in Glaskeramik erfolgt auf die übliche, seit Jahrzehnten bekannte Verfahrensweise. Lediglich bei der Verwendung von oxidationsempfindlichen Verstärkungsfasern ist, ebenso wie bei dem sintern, die Anwesenheit von Sauerstoff auszuschließen.

Die Glasphase wird durch eine thermische Behandlung bei Temperaturen oberhalb Tg in die entsprechende Glaskeramik überführt. Dabei wird die Umwandlungstemperatur und die Ausbildung von Kristallphasen mittels an sich bekannter Methoden, wie z.B. durch eine mittels Differentialthermoanalyse (DTA) ermittelte Haltekurve, bestimmt.

Zunächst wird der Rohkörper auf die sog. Keimbildungstemperatur erwärmt, bei der sich im Glas Kristallisationskeime bilden. Dazu werden die Gläser üblicherweise bei einer Temperatur von ca. 5 - 50°C oberhalb Tg, vorzugsweise 10 - 30°C oberhalb Tg solange erwärmt, bis sich ausreichend primäre Kristallite gebildet haben. Die übliche Glasübergangstemperatur dieser Gläser beträgt 700 - 850°C.

Die Haltedauer zur Ausbildung der Primärkristallite bzw. Kristallkeime hängt von den gewünschten Eigenschaften ab und beträgt üblicherweise mindestens 0,5 Stunden, vorzugsweise mindestens 1 Stunde, wobei mindestens 1,5 Stunden besonders bevorzugt sind. Als maximale Dauer werden üblicherweise 3 Tage angesehen, wobei 2 Tage und insbesondere 1 Tag als maximale Dauer zur Ausbildung der Primärkristallkeime bevorzugt sind. In den meisten Fällen ist eine Dauer von 2-12 Stunden ausreichend.

Ist die gewünschte Anzahl von Kristallkeimen gebildet, wird auf eine höhere Temperatur erwärmt, bei der sich die Hauptkristallphasen abscheiden. Diese Temperatur liegt üblicherweise mindestens 20°C, vorzugsweise mindestens 50°C, oberhalb der Bildungstemperatur der Primärkristallite. In besonderen Fällen hat es sich als zweckmäßig erwiesen, nach Ausscheidung der Hauptkristallphasen (Sekundärkristalle), insbesondere Spinell und Sapphirin, noch einmal aufweitere höhere Temperaturen zu erwärmen und so weitere Kristallphasen, wie z.B. Pyrochlore, Pyrosilikate, Xenotime und/oder Rutil sowie Mischungen davon, aus der zwischen den Primär- und/oder Sekundärkristallen verbliebenen Restglasphase auszuscheiden.
Da der Grundkörper zur Verdichtung heißgepreßt wird, können jedoch die nötigen Keimbildungs- und/oder Kristallisationsprozesse simultan mit der Verdichtung durch das Heizpressen erfolgen. Durch eine entsprechende Führung des Heizprozesses erfolgt die Keramisierung in situ, d.h. besonders schnell und wirtschaftlich.

Eine weitere vorteilhafte Herstellungsweise, die nicht von Glaspulver ausgeht, besteht darin, eine Glasplatte aus Rohglas thermisch zu erweichen und dann eine textiles Flächengebilde aus Verstärkungsfasern unter Druck, z.B. durch Walzen in die Glasoberfläche einzuarbeiten. Diese Arbeitsweise ist außerordentlich wirtschaftlich und wird insbesondere dadurch gefördert, das das Ausgangsglas für die beschriebene Glaskeramik weniger zu unerwünschter Keimbildung und Kristallisation neigt, als Ausgangsgläser mit anderen Zusammensetzungen.

Das Panzermaterial dient der Herstellung von Panzerungen. Zu diesem Zweck wird es üblicherweise mit anderen Stoffen zusammen zu einer Panzerung verarbeitet. So wird z.B. das Panzermaterial in Form von Kacheln, Plättchen oder Kugeln auf oder in einem Gewebe aus hochfesten Fasern wie Aramidfasern u. dergleichen befestigt. Das Panzermaterial kann auch rückseitig mit Metallplatten wie Aluminium, Stahl oder Titan verbunden sein oder mit zusammengesetzten Materialien wie faserverstärkten Kunststoffen verklebt sein. Die Kombinationsmöglichkeiten mit anderen Materialien sind an sich bereits aus der Verwendung der bekannten Keramikmaterialien bekannt und gehören zum Erfahrungs- und Wissensumfang eines Durchschnittsfachmanns.

Als besonderer Vorteil des erfindungsgemäßen Panzermaterials muß aber herausgestellt werden, dass das der Glaskeramik zugrundeliegende Grünglas, wie bereits gesagt, gegenüber einer spontanen unerwünschten Kristallkeimbildung unempfindlich ist. Diese Eigenschaft erlaubt es auf besonders einfache Weise, das Grünglas vor der Keramisierung thermisch zu entspannen und es auf seine Erweichungstemperatur zu bringen und dann zu einer gewünschten Endform zu verformen. Diese Endform wird dann keramisiert und man kann dadurch Panzermaterialien herstellen, die der geplanten Verwendung besonders gut angepasst sind, z.B. Körperrundungen, Fahrzeugwandungen und dergleichen.

### Beispiele 1 bis 4

Es wurden verschiedene Gläser erschmolzen und in einem an sich bekannten Verfahren in Glaskeramik umgewandelt. Die Zusammensetzung (in Gew.-% auf Oxidbasis), Temperatur und Dauer der Keimbildung, Temperatur(en) und Dauer der Kristallisation sowie das E-Modul, die Dichte, das spezifische E-Modul (E-Modul / Dichte) sowie für Beispiel 1 auch der K1c-Wert (Bruchfestigkeit) sind in der nachstehenden Tabelle 1 zusammengefaßt.

### Beispiele 5 bis 7

Es wurden verschiedene faserverstärkte Composite hergestellt. Zusammensetzung und physikalische Daten sind in Tabelle 2 dargestellt.

**Tabelle 1**

| Beispiel | 1 | 2 | 3 | 4 |
|---|---|---|---|---|
| | | | | |
| SiO₂ | 19,43 | 32,72 | 21,26 | 22,70 |
| B₂O₃ | 3,75 | 3,79 | 0,00 | 1,77 |
| P₂O₅ | 0,00 | 0,00 | 10,00 | 7,20 |
| Al₂O₃ | 32,97 | 37,02 | 26,41 | 31,70 |
| TiO₂ | 4,31 | 2,90 | 9,41 | 8,11 |
| Y₂O₃ | 24,34 | 8,20 | 18,61 | 14,00 |
| MgO | 15,20 | 15,37 | 9,97 | 13,10 |
| CaO | 0,00 | 0,00 | 1,32 | 1,42 |
| SrO | 0,00 | 0,00 | 1,22 | 0,00 |
| BaO | 0,00 | 0,00 | 1,81 | 0,00 |
| | | | | |
| Keimbildung | 850°C/1h | 850°C/1h | 750°C/2h | 800°C/2h |
| Kristallisation | 950°C/2h + 1050°C/2h | 950°C/1h | 780°C/1h + 800°C/60h | 1050°C/3h |
| E-Modul [GPa] | 190 | 145 | 140 | 180 |
| K1c [MPa m^{-1/2}] Dichte [g/cm³] | 1,79 | | | |
| | 3.58 | 3.10 | 3.05 | 3.25 |
| Spez. E-Modul [MJ.kg^{-1/2}] | 53,1 | 46,8 | 45,9 | 55,4 |

**Tabelle 2**

| Beispiel | 5 | 6 | 7 |
|---|---|---|---|
| | | | |
| Zusammensetzung der Matrix gemäß Beispiel | 1 | 2 | 4 |
| Gew.-% Matrix | 55 | 60 | 45 |
| Gew.-% C-Faser (Länge 30 mm, 0 8 µm) | | 40 | 30 |
| Gew.-% SiC-Faser (Länge 30 mm, 0 15 µm) | 45 | | 25 |
| Dichte [g·cm⁻³] | 3 | 2,7 | 2,75 |
| E-Modul [GPa] | 280 | 275 | 340 |
| Spezifisches E-Modul [Gpa·cm³·g⁻¹] | 99,3 | 102 | 124 |

## Patentansprüche

1. Verwendung einer Glaskeramik als Panzermaterial,
**dadurch gekennzeichnet, dass** sie (Gew.-.% auf Oxidbasis) enthält:
| | | | |
|---|---|---|---|
| 5 | - | 33 | SiO₂ |
| 20 | - | 50 | Al₂O₃ |
| 5 | - | 40 | MgO |
| 0 | - | 15 | B₂O₃ |
| 0,1 | - | 30 | Y₂O₃, Ln₂O₃, As₂O₃, Nb₂O₅ und/oder Sc₂O₃ |
| 0 | - | 10 | P₂O_{5.} |

2. Verwendung einer Glaskeramik nach Anspruch 1,
**dadurch gekennzeichnet, dass** sie (in Gew.-% auf Oxidbasis) enthält:
| | | | |
|---|---|---|---|
| 5 | - | 33 | SiO₂ |
| 20 | - | 40 | Al₂O₃ |
| 5 | - | 25 | MgO |
| 0,1 | - | 30 | Y₂O₃, Ln₂O₃, As₂O₃ und/oder Nb₂O₅ |
| 0 | - | 15 | B₂O₃ |
| 0,1 | - | 10 | P₂O₅. |

3. Verwendung einer Glaskeramik nach Anspruch 1,
**dadurch gekennzeichnet, dass** sie (in Gew.-% auf Oxidbasis) enthält:
| | | | |
|---|---|---|---|
| 17 | - | 33 | SiO₂ |
| 20 | - | 50 | Al₂O₃ |
| 8 | - | 40 | MgO |
| 0,1 | - | 30 | Y₂O₃, Sc₂O₃ und/oder Nb₂O₅ |
| 1 | - | 15 | B₂O₃. |

4. Verwendung einer Glaskeramik nach einem der Annsprüche 1 bis 3, **dadurch gekennzeichnet, dass** sie einen Alkaligehalt von weniger als 2 Gew.-% hat.

5. Verwendung einer Glaskeramik nach einem oder mehreren der Ansprüche 1 bis 4, **dadurch gekennzeichnet, dass** sie Übergangsmetalloxide in einer Menge von bis zu 10 Gew.-% enthält.

6. Verwendung einer Glaskeramik nach Anspruch 5, **dadurch gekennzeichnet, dass** die Übergangsmetalloxide MnO₂, Fe₂O₃, NiO, CoO, Cr₂O₃, V₂O₅, MoO₃, WO₃ sind.

7. Verwendung einer Glaskeramik nach einem oder mehreren der Ansprüche 1 bis 6, **dadurch gekennzeichnet, dass** sie bis zu 12 Gew.-%, insbesondere 2 bis 10 Gew.-% TiO₂, bis zu 10 Gew.-%, insbesondere 1 bis 8 Gew.-% ZrO₂ und/oder bis zu 10 Gew.-%, insbesondere 1 bis 8 Gew.-% ZnO enthält.

8. Verwendung einer Glaskeramik nach Anspruch 1 oder 2,
**dadurch gekennzeichnet, daß** sie jeweils bis zu 5 Gew.-% CaO, SrO und/oder BaO enthält.

9. Verwendung einer Glaskeramik nach Anspruch 1 oder 3,
**dadurch gekennzeichnet, daß** sie jeweils bis zu 10 Gew.-% CaO, SrO und/oder BaO enthält.

10. Verwendung einer Glaskeramik nach einem der Ansprüche 1 bis 9, **dadurch gekennzeichnet, daß** sie einen Kristallphasengehalt von 30 bis 80 Vol.-% besitzt.

11. Verwendung einer Glaskeramik nach wenigstens einem der vorhergehenden Ansprüche, **dadurch gekennzeichnet, daß** sie mit anorganischen Fasern faserverstärkt ist.

12. Verwendung einer Glaskeramik nach Anspruch 11, **dadurch gekennzeichnet, daß** die anorganischen Verstärkungsfasem aus Kohlenstoff, SiC, Si₃N₄, Al₂O₃, ZrO₂ und/oder Fasern des Sialon-Typs (Si, Al, O, N) bestehen.

13. Verwendung einer Glaskeramik nach Anspruch 12, **dadurch gekennzeichnet, daß** der Faseranteil in der Glaskeramik 5 bis 65 Vol.-% beträgt.

## Claims

1. Use of a glass ceramic as armour material,
**characterized in that** it contains (% by weight based on oxide):
| | | | |
|---|---|---|---|
| 5 | - | 33 | SiO₂ |
| 20 | - | 50 | Al₂O₃ |
| 5 | - | 40 | MgO |
| 0 | - | 15 | B₂O₃ |
| 0.1 | - | 30 | Y₂O₃, Ln₂O₃, As₂O₃, Nb₂O₅ and/or Sc₂O₃ |
| 0 | - | 10 | P₂O₅. |

2. Use of a glass ceramic according to Claim 1,
**characterized in that** it contains (% by weight based on oxide):
| | | | |
|---|---|---|---|
| 5 | - | 33 | SiO₂ |
| 20 | - | 40 | Al₂O₃ |
| 5 | - | 25 | MgO |
| 0.1 | - | 30 | Y₂O₃, Ln₂O₃, As₂O₃ and/or Nb₂O₅ |
| 0 | - | 15 | B₂O₃ |
| 0.1 | - | 10 | P₂O₅. |

3. Use of a glass ceramic according to Claim 1,
**characterized in that** it contains (% by weight based on oxide):
| | | | |
|---|---|---|---|
| 17 | - | 33 | SiO₂ |
| 20 | - | 50 | Al₂O₃ |
| 8 | - | 40 | MgO |
| 0.1 | - | 30 | Y₂O₃, Sc₂O₃ and/or Nb₂O₅ |
| 1 | - | 15 | B₂O₃ |

4. Use of a glass ceramic according to any one of Claims 1 to 3, **characterized in that** it has an alkali metal content of less than 2% by weight.

5. Use of a glass ceramic according to one or more of Claims 1 to 4, **characterized in that** it contains transition metal oxides in an amount of up to 10% by weight.

6. Use of a glass ceramic according to Claim 5,
**characterized in that** the transition metal oxides are MnO₂, Fe₂O₃, NiO, CoO, Cr₂O₃, V₂O₅, MoO₃, WO₃.

7. Use of a glass ceramic according to one or more of Claims 1 to 6, **characterized in that** it contains up to 12% by weight, particularly 2% to 10% by weight of TiO₂, up to 10% by weight, particularly 1% to 8% by weight of ZrO₂ and/or up to 10% by weight, particularly 1% to 8% by weight of ZnO.

8. Use of a glass ceramic according to Claim 1 or 2,
**characterized in that** it contains up to 5% by weight each of CaO, Stro and/or BaO.

9. Use of a glass ceramic according to Claim 1 or 3,
**characterized in that** it contains up to 10% by weight each of CaO, SrO and/or BaO.

10. Use of a glass ceramic according to any one of Claims 1 to 9, **characterized in that** it has a crystal phase content of 30% to 80% by volume.

11. Use of a glass ceramic according to at least one of the preceding claims, **characterized in that** it is fibre reinforced with inorganic fibres.

12. Use of a glass ceramic according to Claim 11,
**characterized in that** the inorganic reinforcing fibres consist of carbon, SiC, Si₃N₄, Al₂O₃, ZrO₂ and/or fibres of the sialon type (Si, Al, 0, N).

13. Use of a glass ceramic according to Claim 12,
**characterized in that** the fibre content of the glass ceramic is in the range from 5% to 65% by volume.

## Revendications

1. Utilisation d'une vitrocéramique comme matériau de blindage,
**caractérisée en ce que** la vitrocéramique contient (en % en poids sur base des oxydes)
| | |
|---|---|
| 5 à 33 | SiO₂ |
| 20 à 50 | Al₂O₃ |
| 5 à 40 | MgO |
| 0 à 15 | B₂O₃ |
| 0,1 à 30 | Y₂O₃, Ln₂O₃, As₂O₃, Nb₂O₅ et/ou Sc₂O₃ |
| 0 à 10 | P₂O₅. |

2. Utilisation d'une vitrocéramique selon la revendication 1,
**caractérisée en ce que** la vitrocéramique contient (en % en poids sur base des oxydes)
| | |
|---|---|
| 5 à 33 | SiO₂ |
| 20 à 40 | Al₂O₃ |
| 5 à 25 | MgO |
| 0,1 à 30 | Y₂O₃, Ln₂O₃, As₂O₃ et/ou Nb₂O₅ |
| 0 à 15 | B₂O₃ |
| 0 , 1 à 10 | P₂O₅. |

3. Utilisation d'une vitrocéramique selon la revendication 1,
**caractérisée en ce que** la vitrocéramique contient (en % en poids sur base des oxydes)
| | |
|---|---|
| 17 à 33 | SiO₂ |
| 20 à 50 | Al₂O₃ |
| 8 à 40 | MgO |
| 0,1 à 30 | Y₂O₃, Sc₂O₃ et/ou Nb₂O₅ |
| 1 à 15 | B₂O₃. |

4. Utilisation d'une vitrocéramique selon l'une des revendications 1 à 3, **caractérisée en ce que** la vitrocéramique présente une teneur en alcali inférieure à 2 % en poids.

5. Utilisation d'une vitrocéramique selon l'une ou plusieurs des revendications 1 à 4, **caractérisée en ce que** la vitrocéramique contient les oxydes de métaux de transition en proportion pouvant atteindre 10 % en poids.

6. Utilisation d'une vitrocéramique selon la revendication 5, **caractérisée en ce que** les oxydes de métaux de transition sont MnO₂, Fe₂O₃, NiO, CoO, Cr₂O₃, V₂O₅, MoO₃, WO₃.

7. Utilisation d'une vitrocéramique selon l'une ou plusieurs des revendications 1 à 6, **caractérisée en ce qu'**elle contient jusque 12 % en poids et en particulier de 2 à 10 % en poids de TiO₂, jusque 10 % en poids et en particulier de 1 à 8 % en poids de ZrO₂ et/ou, jusque 10 % en poids et en particulier de 1 à 8 % en poids de ZnO.

8. Utilisation d'une vitrocéramique selon les revendications 1 ou 2, **caractérisée en ce que** la vitrocéramique contient jusque 5 % en poids de CaO, de SrO et/ou de BaO.

9. Utilisation d'une vitrocéramique selon les revendications 1 ou 3, **caractérisée en ce que** la vitrocéramique contient jusque 10 % en poids de CaO, de SrO et/ou de BaO.

10. Utilisation d'une vitrocéramique selon l'une des revendications 1 à 9, **caractérisée en ce que** sa teneur en phase cristalline est comprise entre 30 et 80 % en volume.

11. Utilisation d'une vitrocéramique selon au moins l'une des revendications précédentes, **caractérisée en ce que** la vitrocéramique est renforcée de fibres minérales.

12. Utilisation d'une vitrocéramique selon la revendication 11, **caractérisée en ce que** les fibres minérales de renfort sont constituées de carbone, de SiC, de Si₃N₄, d'Al₂O₃, de ZrO₂ et/ou sont des fibres de type sialon (Si, Al, O, N).

13. Utilisation d'une vitrocéramique selon la revendication 12, **caractérisée en ce que** la teneur en fibres dans la vitrocéramique est comprise entre 5 et 65 % en volume.
